# EUROPÄISCHE PATENTSCHRIFT

(11) **EP 2 897 891 B1**
(45) Veröffentlichungstag und Bekanntmachung des Hinweises auf die Patenterteilung: **17.08.2016**
(21) Anmeldenummer: 13766896.8
(22) Anmeldetag: 19.09.2013
(51) Int. Cl.: B66C 23/20, F16M 13/02

(54) **UMFASSUNGSRAHMEN, VERFAHREN ZUM MONTIEREN EINES UMFASSUNGSRAHMENS, UND VERWENDUNG EINES UMFASSUNGSRAHMENS ZUM VERBINDEN EINES TURMDREHKRANS MIT EINEM OBJEKT**
PERIMETER FRAME, METHOD TO INSTALL A PERIMETER FRAME AND USE OF A PERIMETER FRAME TO CONNECT A TOWER CRANE WITH AN OBJECT
CADRE PÉRIMÉTRAL, PROCÉDÉ POUR INSTALLER UN CADRE PÉRIMÉTRAL ET UTILISATION D'UN CADRE PÉRIMÉTRAL POUR CONNECTER UNE GRUE À TOUR À UN OBJET

(30) Priorität: 19.09.2012 DE 102012018524
(43) Veröffentlichungstag der Anmeldung: 29.07.2015
(73) Patentinhaber: Liebherr-Werk Biberach GmbH, 88400 Biberach an der Riß (DE)
(72) Erfinder: MAYER, Joachim, 88400 Biberach (DE)
(74) Vertreter: Laufhütte, Dieter
(86) Internationale Anmeldenummer: PCT/EP2013/002821
(87) Internationale Veröffentlichungsnummer: WO 2014/044395

(56) Entgegenhaltungen:
- FR-A1- 2 803 865
- JP-A- 2005 112 518
- JP-A- 2010 006 481
- JP-A- 2011 241 084
- KR-A- 20060 105 938
- KR-B1- 100 825 255

## Beschreibung

Die vorliegende Erfindung betrifft einen Umfassungsrahmen, der an einem Turmdrehkran anbringbar ist und über welchen der Turmdrehkran mit einem Objekt, wie beispielsweise einem Gebäude, verbindbar ist.

Des Weiteren betrifft die Erfindung ein Verfahren zum Montieren des Umfassungsrahmens an einen Turmdrehkran und eine Verwendung des Umfassungsrahmens zum Verbinden eines Turmdrehkrans mit einem Objekt.

Bei der Nutzung von Turmdrehkranen ist es besonders bei großen Hakenhöhen häufig notwendig, den Kranturm an einem Objekt, wie z. B. einem Gebäude zu verankern und den Kranturm so auf besonders wirtschaftliche Weise zu stabilisieren. Zu diesem Zweck wird der Kranturm üblicherweise mit einem sogenannten Umfassungsrahmen umschlossen, der spielfrei mit dem Kranturm verbunden ist und somit die horizontal auf den Kran einwirkenden Kräfte durch direkten Kontakt aufnehmen kann. Verankerungsstreben, die wiederum den Umfassungsrahmen mit dem Objekt verbinden und in diesem verankert sind, leiten die Kräfte aus dem Kranturm endgültig in das Objekt ab.

Für gewöhnlich besteht dabei der Umfassungsrahmen aus einem U-förmigen Element, das einen Mittelabschnitt und zwei Endabschnitte umfasst und das den Kranturm, welcher einen viereckigen Querschnitt aufweist, von drei Seiten umfasst. Ferner umfasst der Umfassungsrahmen ein an dem U-förmigen Element gelenkig gelagertes Verriegelungselement, welches den Kranturm in einer geschlossenen Stellung an einer vierten Seite umfasst.

Häufig ist dabei das U-förmige Element des Umfassungsrahmens mit seinem Mittelabschnitt dem Objekt zugewandt, mit dem der Turmdrehkran verbunden werden soll, so dass die mit dem Objekt in Verbindung stehenden Verankerungsstreben im Bereich des Mittelabschnitts des U-förmigen Elements fixiert werden können.

Ein so ausgestalteter Umfassungsrahmen erfüllt zwar die Anforderungen hinsichtlich der Stabilisierung des Turmdrehkrans, die durch die Verbindung des Kranturms mit einem Objekt erreicht wird, jedoch ergeben sich bei der Montage des Umfassungsrahmens an den Turmdrehkran Erschwerungen.

Aus naheliegenden Gründen wird zur Montage des Umfassungsrahmens ein Kran verwendet, der den Umfassungsrahmen an einem Aufhängepunkt hält und ihn in eine Montagestellung befördert. Dabei hängt der Umfassungsrahmen beim Transport von einer Lagerstellung, die sich in der Nähe des Krans, jedoch entfernt von der Montagestellung befindet, zu einer Montagestellung, die sich in einer bestimmten Höhe des Kranturms befindet, in einer Transportstellung senkrecht in der Luft. Da allerdings die Montagestellung eine horizontale Stellung des Umfassungsrahmens erfordert, ist es notwendig, den Umfassungsrahmen von der Transportstellung um 90° in die Montagestellung zu drehen und den Umfassungsrahmen in der nun horizontalen Montagestellung so zu platzieren, dass sich der Kranturm innerhalb des U-förmigen Elements befindet. Anstelle einer Transportstellung senkrecht in der Luft kann der Umfassungsrahmen auch bereits beim Transport zur Montagestellung in einer horizontalen Position gehalten werden. Hierzu ist er an mindestens drei Punkten des Rahmens befestigt. In diesem Fall ist zwar die Aufhängung komplizierter zu bewerkstelligen, dafür entfällt allerdings die Drehung um 90° von der Transportstellung in die Montagestellung.

Hierbei muss sichergestellt werden, dass die beiden Endabschnitte des U-förmigen Elements nicht mit der Struktur des Kranturms kollidieren. Hierzu werden üblicherweise zusätzliche Sicherungsmittel, wie z. B. Ketten oder Seile bereitgestellt, die an der Turmkonstruktion fixiert sind und zur Aufnahme des Eigengewichts des Umfassungsrahmens und zu dessen Positionierung geeignet sind.

Das Dokument JP 2011 241084 A offenbart einen Umfassungsrahmen nach dem Oberbegriff des Anspruchs 1.

Aufgabe der Erfindung ist es daher, einen Umfassungsrahmen der eingangs angegebenen Art zu schaffen, der sich einfach und schnell von einer Lagerstellung über eine erhöhte Position in eine Montagestellung bringen lässt und sich ebenso einfach und schnell von dieser Montagestellung zurück in eine Lagerstellung bringen lässt. Es ist außerdem Aufgabe der Erfindung, ein Verfahren zur Montage eines erfindungsgemäßen Umfassungsrahmens und dessen Verwendung zum Verbinden eines Turmdrehkrans mit einem Objekt bereitzustellen.

Erfindungsgemäß wird diese Aufgabe von einem Umfassungsrahmen gemäß Anspruch 1 gelöst. Bevorzugte Ausgestaltungen sind Gegenstand der abhängigen Ansprüche. Weiterhin wird die Aufgabe durch das Verfahren gemäß Anspruch 8 und die Verwendung der erfindungsgemäßen Vorrichtung nach Anspruch 9 gelöst.

Der dieser Erfindung zu Grunde liegende Umfassungsrahmen, welcher an einem Kranturm eines Turmdrehkrans anbringbar ist und den Turmdrehkran mit einem Objekt, beispielsweise einem Gebäude, verbinden kann, umfasset ein biegesteifes Anschlusselement und ein Verriegelungselement, wobei das Anschlusselement in Form eines Elementes, das den Kranturm in der Verankerungsebene auf zwei Außenseiten horizontal stützt, bereitgestellt ist. Gemäß einem Ausführungsbeispiel ergibt sich hier eine winkelförmige Form des Anschlusselements. Das Verwenden eines winkelförmigen statt eines U-förmigen Elements bedeutet für die Montage, dass bei der Positionierung des Umfassungsrahmens am Kranturm nicht, wie beim U-förmigen Element, zwei Endabschnitte des U-förmigen Elements in Kollision mit dem Kranturm geraten können und bei der Positionierung entsprechend aufwendig berücksichtigt werden müssen, sondern dass nur noch ein einem Endabschnitt vergleichbarer Abschnitt bei der Positionierung berücksichtigt werden muss. Dies stellt eine wesentliche Vereinfachung bei der Montage von Umfassungsrahmen dar.

Es bedeutet, dass der Umfassungsrahmen, welcher vorteilhafterweise wenigstens einen Hilfsaufhängungsabschnitt umfasst, an dem eine Hilfsaufhängung anbringbar ist, über die der Umfassungsrahmen mit dem Turmdrehkran verbindbar ist, nun mittels dieser Hilfsaufhängung einfacher in die Montagestellung bringbar ist, da eine Kollision mit einem zweiten, erfindungsgemäß nicht vorhandenen Abschnitt, der einem Endabschnitt des U-förmigen Elements entspricht, nicht möglich ist. Die Hilfsaufhängung kann dabei in verschiedenen Ausführungsformen bereitgestellt sein. Sie kann ein starres Element, z.B. einen Metallträger umfassen oder auch in einer flexiblen Ausführungsform vorliegen. Besonders vorteilhaft ist es dabei, wenn die Hilfsaufhängung ein Seil umfasst

Ein Vorteil der Hilfsaufhängung besteht darin, dass bei entsprechender Anbringung der Hilfsaufhängung eine gute Selbstpositionierung des Rahmens während des Herablassens des Umfassungsrahmens von einer erhöhten Position in die Montagestellung ermöglicht wird.

Während beim Herablassen des Umfassungsrahmens von einer erhöhten Position in die Montagestellung einerseits die Hilfsaufhängung zu einer korrekten Positionierung beiträgt, ist es andererseits besonders vorteilhaft, wenn der Umfassungsrahmen wenigstens einen Auflageabschnitt umfasst, an dem der Umfassungsrahmen in einer horizontalen Position mit wenigstens einer Auflagekonsole kontaktierbar und durch diese fixierbar ist. Dies gilt im Besonderen in der Montagestellung.

Hilfsaufhängung, Auflagekonsole und Auflageabschnitt ermöglichen somit in Verbindung mit der winkelförmigen Ausgestaltung des Anschlusselements und der entsprechenden Auswahl des Aufhängepunkts des Umfassungsrahmens eine im Vergleich zum Stand der Technik einfachere Positionierung des Umfassungsrahmens in die Montagestellung.

Zum Zwecke der Umfassung des Kranturms durch den Umfassungsrahmen ist es vorteilhaft, wenn ein Verriegelungselement vorgesehen ist, das zwei Verriegelungsstäbe umfasst, welche gelenkig aneinander und gelenkig an dem Anschlusselement angeschlossen sind. Das Verriegelungselement umfasst dabei einerseits in einer geschlossenen Stellung den Kranturm an den Seiten, an denen der Kranturm nicht vom Anschlusselement umfasst ist. In einer geöffneten Stellung ist das Verriegelungselement andererseits so platzierbar, dass es bei der Positionierung des Anschlusselements in die Montagestellung nicht hinderlich ist.

Die gelenkige Ausführung des Verriegelungselements ermöglicht ferner ein Abklappen des Verriegelungselements, so dass dieses zum einen platzsparend bereitgestellt werden kann und zum anderen kein zusätzlicher Verbindungsschritt der beiden Verriegelungsstäbe untereinander während des Montagevorgangs notwendig ist. Ein weiterer Vorteil besteht darin, dass durch die gelenkige Bereitstellung des Verriegelungselements ein sicherer gleichzeitiger Transport von Verriegelungselement und Anschlusselement, also der Transport des kompletten Umfassungsrahmens, von einer Lagerstellung zu einer Montagestellung möglich ist. Bei dem Transport kann das Verriegelungselement dabei derart in die geöffneten Stellung geklappt sein, dass zum einen das Positionieren des Anschlusselements in die Montagestellung an einem Kranturm möglich ist und zum anderen das Verriegelungselement nach Erreichen der Montagestellung einfach mittels der gelenkigen Anschlüsse in die geschlossene Stellung und damit in die Betriebsstellung geklappt werden kann.

Weiterhin vorteilhaft ist es, wenn am Winkelabschnitt wenigstens ein Befestigungsabschnitt bereitgestellt ist, an dem wenigstens eine Verankerungsstrebe befestigbar ist, welche mit dem Objekt verbindbar ist. Die Verbindung des wenigstens einen Befestigungsabschnitts mit der wenigstens einen Verankerungsstrebe stellt sicher, dass die auf den Kran in alle Richtungen einwirkenden Horizontalkräfte vom Umfassungsrahmen endgültig in das Gebäude einleitbar sind.

Es können als Verankerungsgeometrie alle denkbaren Elemente wie zum Beispiel Öffnungen, Ösen oder Haken an dem wenigstens einen Befestigungsabschnitt bereitgestellt sein, so dass eine Anbindung des Krans an das Objekt entsprechend unterschiedlicher am Montageort des Krans vorfindbarer Gegebenheiten erfolgen kann. Besonders vorteilhaft ist es, wenn dabei der wenigstens eine Befestigungsabschnitt als Verankerungsgeometrie wenigstens eine Öffnung umfasst. So ist es denkbar, mit Hilfe einer entsprechenden Verankerungsgeometrie den Umfassungsrahmen und hier speziell dessen Anschlusselement in an einem Gebäude gegebenenfalls auftretenden Gebäudeecken oder Gebäuderücksprüngen einzupassen oder die Verankerungsgeometrie so bereitzustellen, dass eine schräge Positionierung des Krans zur Objektaußenseite ermöglicht wird.

Beim Einleiten der auf den Kran in alle Richtungen wirkenden Horizontalkräfte in ein den Kran stabilisierendes Objekt ist es außerdem vorteilhaft, wenn an dem Anschlusselement und dem Verriegelungselement wenigstens ein Stützabschnitt bereitgestellt ist, der den Umfassungsrahmen gegen den Kranturm abstützt, und/oder dass wenigstens ein Verriegelungsabschnitt vorgesehen ist zum Einfassen von wenigstens einem Eckstiel des Kranturms zwischen dem wenigstens einen Verriegelungsabschnitten einerseits und dem Anschlusselement und/oder dem Verriegelungselement andererseits. Dieser mindestens eine Stützabschnitt kann aus einem Material wie zum Beispiel Gummi bereitgestellt sein, das eine geringere Härte als das druckfesten Material wie z. B. Gummi usw. von Kranturm und Umfassungsrahmen hat und der somit sicherstellt, dass eine Beschädigung der Korrosionsschutzschicht, welche die Folge eines direkten Kontakts von Umfassungsrahmen und Kranturm sein kann, verhindert wird. Der wenigstens eine Verriegelungsabschnitt ermöglicht es vorteilhaft, die Eckstiele des Turmdrehkrans auszusteifen.

Die Erfindung betrifft des Weiteren ein Verfahren zum Montieren eines erfindungsgemäßen Umfassungsrahmens an einen Turmdrehkran, wobei
in einem ersten Schritt der Umfassungsrahmen mit einer Kranaufhängung eines Krans verbunden wird,
in einem zweiten Schritt der Umfassungsrahmen mittels des Krans in eine erhöhte Position angehoben wird,
in einem dritten Schritt der Umfassungsrahmen mit dem Kranturm mittels der Hilfsaufhängung verbunden wird,
in einem vierten Schritt der Umfassungsrahmen in eine Montagestellung am Kranturm befördert wird und
in einem fünften Schritt, welcher ein Verriegelungsschritt ist, das Verriegelungselement von der geöffneten in die geschlossene Stellung gebracht wird.

Ferner ist die vorliegende Erfindung auf eine Verwendung eines erfindungsgemäßen Umfassungsrahmens zum Verbinden eines Turmdrehkrans mit einem Objekt gerichtet.

Im Folgenden wird die Erfindung anhand der beiliegenden Figuren im Detail erläutert. Dabei zeigen:
- Figur 1:: die Montagesituation am Beginn des vierten Schritts des Montagevorgangs mit Umfassungsrahmen in erhöhter Position;
- Figur 2:: die Montagesituation am Ende des vierten Schritts des Montagevorgangs mit Umfassungsrahmen in Montagestellung;
- Figur 3:: eine Draufsicht mit Kranturm, Umfassungsrahmen und Gebäude;
- Figur 4:: die Montagesituation am Beginn des fünften Schritts des Montagevorgangs, wobei der Umfassungsrahmen in Montagestellung und das Verriegelungselement in der geöffneten Stellung ist;
- Figur 5:: den Umfassungsrahmen am Ende des Montagevorgangs und in Betriebsstellung, wobei das Verriegelungselement in geschlossener Stellung ist; und
- Figur 6:: den Umfassungsrahmen mit vier Verriegelungsabschnitten.

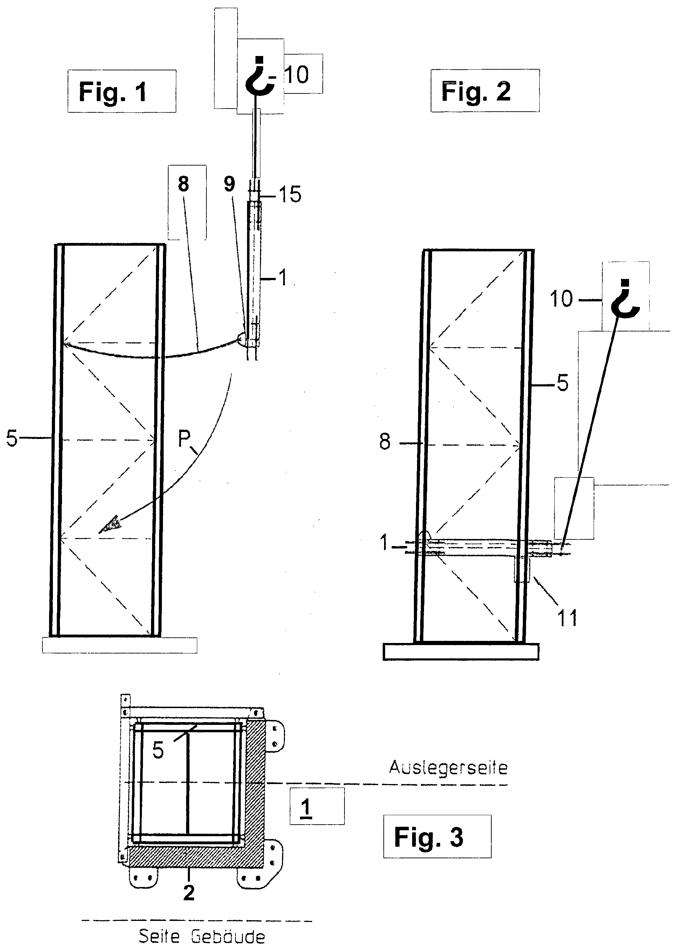

Figur 1 zeigt den vierten Schritt bei der Montage des erfindungsgemäßen Umfassungsrahmens 1 an den Kranturm 5, wobei sich der Umfassungsrahmen 1 in einer erhöhten Position befindet. Hierzu wird eine Kranaufhängung 10 und ein entsprechender Kran (nicht gezeigt) mit dem Umfassungsrahmen 1 verbunden und der Umfassungsrahmen 1 vom Kran angehoben. In entsprechender Höhe wird dann der Umfassungsrahmen 1 mit dem Kranturm 5 über die Hilfsaufhängung 8 und den Hilfsaufhängungsabschnitt 9 verbunden. Entsprechend dem Pfeil P wird nun beim Herunterlassen der Umfassungsrahmen 1 in oder nahe an die Montagestellung gebracht. Die Hilfsaufhängung 8 ist dabei derart am Kranturm 5 befestigt, dass eine über sie auf den Umfassungsrahmen 1 wirkende Kraft beim Herunterlassen des Umfassungsrahmens 1 diesen in die gewünschte Stellung oder in die Nähe der gewünschten Stellung bringt.

Figur 2 zeigt den Umfassungsrahmen 1, nachdem er von der erhöhten Position in die Montagestellung gebracht wurde. Dabei ist zu erkennen, dass die Hilfsaufhängung 8 und die Auflagekonsole 11 so angeordnet sind, dass der Umfassungsrahmen 1 in der gewünschten Montagestellung von ihnen gehalten wird. Wie in Figur 2 zu erkennen, ist der Umfassungsrahmen 1 in einer horizontalen Stellung, was dadurch möglich ist, dass die Kranaufhängung 10 an einer entsprechenden Position 15 am Umfassungsrahmen 1 angreift. Wie in dem Ausführungsbeispiel von Figur 2 gezeigt, kann die horizontale Stellung des Umfassungsrahmens 1 also durch die entsprechende Positionierung des Umfassungsrahmens 1 an der Hilfsaufhängung 8, der Auflagekonsole 11 und der Kranaufhängung 10 ermöglicht werden.

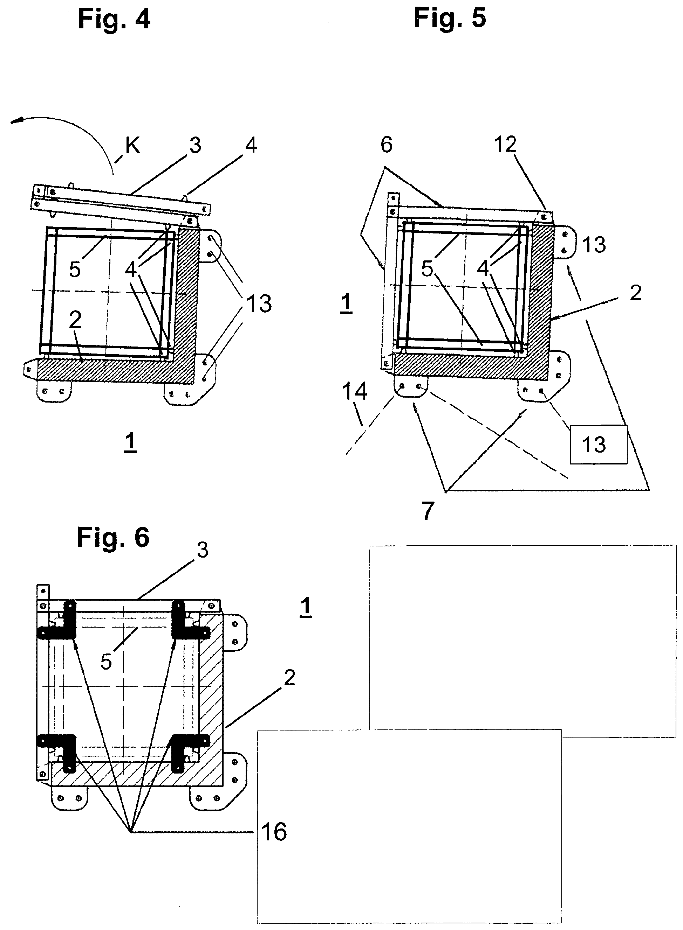

Figur 3 zeigt den erfindungsgemäßen Umfassungsrahmen 1 in Betriebsstellung. Daneben ist als Objekt, an dem der Umfassungsrahmen 1 befestigbar ist, die Seite eines Gebäudes dargestellt. Hierbei wird deutlich, dass ein in Figur 1 dargestellter Montageschritt, bei dem der Umfassungsrahmen 1 seitlich und von oben an den Kranturm 5 gelegt wird, mit einem dem Stand der Technik entsprechenden U-förmigen Umfassungsrahmen so nicht möglich ist. So würde beim Einschwingen des Umfassungsrahmens der Endabschnitt des U-förmigen Elements, der beim aus dem Stand der Technik bekannten Umfassungsrahmen zuerst auf den Kranturm trifft, mit diesem kollidieren und ein erfindungsgemäßes Einschwingen unmöglich machen. Nur dadurch, dass beim erfindungsgemäßen Anschlusselement 2 ein solcher störender Endabschnitt fehlt, ist es möglich, über den in den Figuren 1 und 2 gezeigten Montageschritt und dem in Figur 4 gezeigten Verriegelungsschritt schließlich zu der in den Figuren 3 und 5 gezeigten Betriebsstellung zu gelangen.

Figur 4 zeigt eine Schnittansicht eines Umfassungsrahmens 1 und eines Kranturms 5 in Montagestellung. Die gezeigte Situation entspricht dem fünften Schritt des Montagevorgangs. Dabei ist ersichtlich, dass das Anschlusselement 2 mit dem Kranturm 5 über die Stützabschnitte 4 in Verbindung steht. Das Verriegelungselement 3 liegt dabei nicht am Kranturm 5 an, sondern befindet sich in einer geöffneten Stellung. Es kann wie der Pfeil K verdeutlicht, aufgrund seiner gelenkigen Verbindung in eine geschlossene Stellung geklappt werden.

Figur 5 zeigt eine Schnittansicht eines Umfassungsrahmens 1 und eines Kranturms 5 in der Betriebsstellung. Hierbei ist zu sehen, dass die Verriegelungsstäbe 6 so geklappt wurde, dass der Umfassungsrahmen 1 nunmehr den Kranturm 5 umfasst und mit diesem über die Stützabschnitte 4 in Kontakt ist. Die beiden Verriegelungsstäbe 6 sind in der Betriebsstellung an wenigstens zwei Verbindungsabschnitten 12 mit dem Anschlusselement 2 verbunden und befinden sich in der geschlossenen Stellung.

In der Betriebsstellung können horizontal auf den Kranturm 5 wirkende, das heißt in der Zeichenebene liegende Kräfte über die Stützabschnitte 4 nun an den Umfassungsrahmen 1 weitergegeben werden. Um diese Kräfte wiederum vom Umfassungsrahmen 1 über Verankerungsstreben 14 (in Figur 5 angedeutet) an ein den Turmdrehkran stützendes Objekt weiterzugeben, ist am Anschlusselement 2 eine Mehrzahl von Befestigungsabschnitten 7 bereitgestellt. Im vorliegenden Ausführungsbeispiel sind drei Befestigungsabschnitte 7 mit je zwei oder vier Öffnungen 13 als Verankerungsgeometrie für das Befestigen der Verankerungsstreben 14 gezeigt. Jedoch können erfindungsgemäß eine beliebige Anzahl von Befestigungsabschnitten 7 und eine beliebig ausgestaltete Verankerungsgeometrie vorgesehen sein.

Figur 6 zeigt vier Verriegelungsabschnitte 16, die zur Aussteifung der Eckstiele so mit dem Anschlusselement 2 und dem Verriegelungselement 3 des Umfassungsrahmens 1 verbunden werden können, dass der Kranturm 5 bzw. dessen Eckstiele zwischen Verriegelungsabschnitten 16 einerseits und dem Anschlusselement 2 und/oder dem Verriegelungselement 3 andererseits eingefasst und dadurch ausgesteift werden. Hierdurch kann eine ersatzweise Turmaussteifung erreicht werden.

## Patentansprüche

1. Umfassungsrahmen (1), welcher an einem Kranturm (5) eines Turmdrehkrans anbringbar ist und den Turmdrehkran mit einem Objekt, beispielsweise einem Gebäude, verbinden kann, umfassend ein biegesteifes Anschlusselement (2) und ein Verriegelungselement (3), wobei das Anschlusselement (2) in Form eines Elementes, das den Kranturm (5) in der Verankerungsebene auf zwei Außenseiten horizontal stützt, bereitgestellt ist, **dadurch gekennzeichnet, dass** der Umfassungsrahmen (1) wenigstens einen Hilfsaufhängungsabschnitt (9) umfasst, an dem eine Hilfsaufhängung (8) anbringbar ist, die den Umfassungsrahmen (1) mit dem Turmdrehkran verbindet.

2. Umfassungsrahmen (1) nach Anspruch 1, **dadurch gekennzeichnet, dass** die Hilfsaufhängung (8) ein Seil umfasst.

3. Umfassungsrahmen (1) nach einem der vorhergehenden Ansprüche, **dadurch gekennzeichnet, dass** der Umfassungsrahmen (1) wenigstens einen Auflageabschnitt umfasst, an dem der Umfassungsrahmen (1) in einer horizontalen Position mit wenigstens einer Auflagekonsole (11) kontaktierbar und durch diese fixierbar ist.

4. Umfassungsrahmen (1) nach einem der vorhergehenden Ansprüche, **dadurch gekennzeichnet, dass** das Verriegelungselement (3) zwei Verriegelungsstreben (6) umfasst, welche gelenkig aneinander und gelenkig an dem Anschlusselement (2) angeschlossen sind.

5. Umfassungsrahmen (1) nach Anspruch 4, **dadurch gekennzeichnet, dass** am Winkelabschnitt wenigstens ein Befestigungsabschnitt (7) bereitgestellt ist, an dem wenigstens eine Verankerungsstrebe (14) befestigbar ist, wobei die Verankerungsstrebe (14) mit dem Objekt verbindbar ist.

6. Umfassungsrahmen (1) nach Anspruch 5, **dadurch gekennzeichnet, dass** der wenigstens eine Befestigungsabschnitt (7) als Verankerungsgeometrien wenigstens eine Öffnung umfasst.

7. Umfassungsrahmen (1) nach einem der vorhergehenden Ansprüche, **dadurch gekennzeichnet, dass** an dem Anschlusselement (2) und dem Verriegelungselement (3) wenigstens ein Stützabschnitt (4) bereitgestellt ist, der den Umfassungsrahmen (1) gegen den Turmdrehkran abstützt, und/oder dass wenigstens ein Verriegelungsabschnitt (16) vorgesehen ist zum Einfassen von wenigstens einem Eckstiel des Kranturms (5) zwischen dem wenigstens einen Verriegelungsabschnitten (16) einerseits und dem Anschlusselement (2) und/oder dem Verriegelungselement (3) andererseits.

8. Verfahren zum Montieren eines Umfassungsrahmens (1) nach einem der vorhergehenden Ansprüche an einen Turmdrehkran, umfassend die Schritte
• Verbinden des Umfassungsrahmens (1) mit einer Kranaufhängung eines Krans
• Anheben des Umfassungsrahmens (1) in eine erhöhte Position mittels des Krans
• Verbinden des Umfassungsrahmens (1) mit dem Kranturm (5) mittels einer Hilfsaufhängung
• Beförderung des Umfassungsrahmens (1) in eine Montageposition am Kranturm (5)
• Verriegeln des Verriegelungselements (3)

9. Verwendung eines Umfassungsrahmens (1) nach einem der Ansprüche 1 bis 7 zum Verbinden eines Turmdrehkrans mit einem Objekt.

## Claims

1. A surrounding frame (1) which can be attached to a crane tower (5) of a tower slewing crane and which can connect the tower slewing crane to an object, for example to a building, comprising a flexurally stiff connection element (2) and a latching element (3),
wherein the connection element (2) is provided in the form of an element which horizontally supports the crane tower (5) in the anchorage plane at two outer sides, **characterized in that** the surrounding frame (1) comprises at least one auxiliary suspension section (9) to which an auxiliary suspension (8) can be attached which connects the surrounding frame (1) to the tower slewing crane.

2. A surrounding frame (1) in accordance with claim 1, **characterized in that** the auxiliary suspension (8) comprises a rope.

3. A surrounding frame (1) in accordance with one of the preceding claims, **characterized in that** the surrounding frame (1) comprises at least one support section at which the surrounding frame (1) can be contacted by at least one support console (11) in a horizontal position and can be fixed by it.

4. A surrounding frame (1) in accordance with one of the preceding claims, **characterized in that** the latching element (3) comprises two latching braces (6) which are connected to one another in an articulated manner and which are connected to the connection element (2) in an articulated manner.

5. A surrounding frame (1) in accordance with claim 4, **characterized in that** at least one fastening section (7) is provided at the bracket section and at least one anchorage brace (14) can be fastened to said fastening section, with the anchorage brace (14) being connectable to the object.

6. A surrounding frame (1) in accordance with claim 5, **characterized in that** the at least one fastening section (7) comprises at least one opening as anchorage geometry.

7. A surrounding frame (1) in accordance with one of the preceding claims, **characterized in that** at least one support section (4) is provided at the connection element (2) and at the latching element (3) and supports the surrounding frame (1) against the tower slewing crane; and/or **in that** at least one latching section (16) is provided for surrounding at least one corner bar of the crane tower (5) between the at least one latching section (16), on the one hand, and the connection element (2) and/or the latching element (3), on the other hand.

8. A method of assembling a surrounding frame (1) in accordance with one of the preceding claims at a tower slewing crane, comprising the steps
• connecting the surrounding frame (1) to a crane suspension of a crane
• raising the surrounding frame (1) into an elevated position by means of the crane
• connecting the surrounding frame (1) to the crane tower (5) by means of an auxiliary suspension
• conveying the surrounding frame (1) into an assembly position at the crane tower (5)
• latching the latching element (3).

9. Use of a surrounding frame (1) in accordance with one of the claims 1 to 7 for connecting a tower slewing crane to an object.

## Revendications

1. Cadre périmétral (1), qui peut être monté sur une tour de grue (5) d'une grue à tour et qui peut connecter la grue à tour à un objet, par exemple un bâtiment, comprenant un élément de raccordement (2) résistant à la flexion et un élément de verrouillage (3),
l'élément de raccordement (2) étant fourni sous la forme d'un élément qui soutient horizontalement la tour de grue (5) dans le niveau d'ancrage sur deux côtés extérieurs, **caractérisé en ce que** le cadre périmétral (1) comprend au moins une partie de suspension auxiliaire (9), sur laquelle une suspension auxiliaire (8) peut être montée, qui connecte le cadre périmétral (1) à la grue à tour.

2. Cadre périmétral (1) selon la revendication 1, **caractérisé en ce que** la suspension auxiliaire (8) comprend un câble.

3. Cadre périmétral (1) selon l'une des revendications précédentes, **caractérisé en ce que** le cadre périmétral (1) comprend au moins une partie d'appui, sur laquelle le cadre périmétral (1) peut venir en contact dans une position horizontale avec au moins une console d'appui (11) et être fixé par celle-ci.

4. Cadre périmétral (1) selon l'une des revendications précédentes, **caractérisé en ce que** l'élément de verrouillage (3) comprend deux barres de verrouillage (6), qui sont connectées de manière articulée entre elles et de manière articulée à l'élément de raccordement (2).

5. Cadre périmétral (1) selon la revendication 4, **caractérisé en ce qu'**au moins une partie de fixation (7), sur laquelle au moins une barre d'ancrage (14) peut être fixée, est fournie sur la partie d'angle, la barre d'ancrage (14) pouvant être connectée à l'objet.

6. Cadre périmétral (1) selon la revendication 5, **caractérisé en ce que** l'au moins une partie de fixation (7) comprend au moins un orifice comme géométries d'ancrage.

7. Cadre périmétral (1) selon l'une des revendications précédentes, **caractérisé en ce qu'**au moins une partie de support (4), qui soutient le cadre périmétral (1) contre la grue à tour, est fournie sur l'élément de raccordement (2) et l'élément de verrouillage (3) et/ou **en ce qu'**au moins une partie de verrouillage (16) est prévue pour border au moins un montant d'angle de la tour de grue (5) entre l'au moins une partie de verrouillage d'un côté et l'élément de raccordement (2) et/ou l'élément de verrouillage (3) de l'autre côté.

8. Procédé de montage d'un cadre périmétral (1) selon l'une des revendications précédentes sur une grue à tour, comprenant les étapes consistant à
• connecter le cadre périmétral (1) à une suspension de grue d'une grue
• lever le cadre périmétral (1) dans une position élevée au moyen de la grue
• connecter le cadre périmétral (1) à une tour de grue (5) au moyen d'une suspension auxiliaire
• transporter le cadre périmétral (1) dans une position de montage sur la tour de grue (5)
• verrouiller l'élément de verrouillage (3).

9. Utilisation d'un cadre périmétral (1) selon l'une des revendications 1 à 7 pour connecter une grue à tour à un objet.
